# EUROPÄISCHE PATENTSCHRIFT

(11) **EP 2 215 375 B1**
(45) Veröffentlichungstag und Bekanntmachung des Hinweises auf die Patenterteilung: **16.11.2016**
(21) Anmeldenummer: 08785839.5
(22) Anmeldetag: 06.09.2008
(51) Int. Cl.: F16D 13/64

(54) **VERFAHREN ZUR MONTAGE EINER REIBSCHLÜSSIG ARBEITENDEN EINRICHTUNG, REIBSCHLÜSSIG ARBEITENDE EINRICHTUNG MIT EINEM REIBLAMELLENSATZ UND REIBLAMELLENSATZ FÜR EINE SOLCHE REIBSCHLÜSSIG ARBEITENDE EINRICHTUNG**
METHOD FOR ASSEMBLING OF A FRICTIONALLY OPERATING DEVICE, FRICTIONALLY OPERATING DEVICE COMPRISING A SET OF FRICTION DISKS, AND SET OF FRICTION DISKS FOR SUCH A FRICTIONALLY OPERATING DEVICE
PROCÉDÉ POUR MONTER UN DISPOSITIF FONCTIONNANT PAR FRICTION, DISPOSITIF FONCTIONNANT PAR FRICTION DOTÉ D'UN ENSEMBLE DE LAMELLES DE FRICTION ET ENSEMBLE DE LAMELLES DE FRICTION POUR UN DISPOSITIF FONCTIONNANT PAR FRICTION DE CE TYPE

(30) Priorität: 10.10.2007 DE 102007048765
(43) Veröffentlichungstag der Anmeldung: 11.08.2010
(73) Patentinhaber: BorgWarner Inc., Auburn Hills, MI 48326 (US)
(72) Erfinder: MERKEL, Harald, Otto, 74918 Angelbachtal (DE); WAGNER, Michael, 68782 Brühl (DE)
(74) Vertreter: Leckel, Ulf
(86) Internationale Anmeldenummer: PCT/EP2008/007312
(87) Internationale Veröffentlichungsnummer: WO 2009/049724

(56) Entgegenhaltungen:
- DE-A1- 10 307 657
- US-A- 4 585 096
- US-A- 5 934 435
- US-A- 5 992 577

## Beschreibung

Die vorliegende Erfindung betrifft ein Verfahren zur Montage oder/und Herstellung einer reibschlüssig arbeitenden Einrichtung, eine reibschlüssig arbeitende Einrichtung mit einem ersten Reiblamellensatz, dessen Reiblamellen in axialer Richtung hintereinander drehfest an einem ersten Lamellenträger angeordnet sind, und einen Reiblamellensatz für eine solche reibschlüssig arbeitende Einrichtung.

Aus dem Stand der Technik sind Verfahren zur Montage reibschlüssig arbeitender Einrichtungen, insbesondere zur Montage von Lamellenkupplungen bekannt. Bei den bekannten Verfahren werden ein erster Reiblamellensatz und ein zweiter Reiblamellensatz bereitgestellt. Während die Reiblamellen des ersten Reiblamellensatzes drehfest mit einem ersten Lamellenträger verbunden werden, werden die Reiblamellen des zweiten Reiblamellensatzes drehfest mit einem zweiten Lamellenträger verbunden. Dies führt während des Betriebes der Lamellenkupplung dazu, dass die Reiblamellen des ersten Reiblamellensatzes stets in etwa die gleiche Drehposition zueinander einnehmen, während die Reiblamellen des zweiten Reiblamellensatzes ebenfalls im Wesentlichen stets dieselbe Drehposition zueinander einnehmen. Die Reiblamellen des ersten Reiblamellensatzes können hingegen relativ zu den Reiblamellen des zweiten Reiblamellensatzes verdreht werden und umgekehrt. So können die Reiblamellen des ersten Reiblamellensatzes beispielsweise eine Innenverzahnung aufweisen, um drehfest mit der Außenverzahnung des als Innenlamellenträger ausgebildeten ersten Lamellenträgers verbunden werden zu können, während die Reiblamellen des zweiten Reiblamellensatzes dementsprechend eine Außenverzahnung aufweisen können, um mit einer Innenverzahnung des als Außenlamellenträger ausgebildeten zweiten Lamellenträgers drehfest verbunden werden zu können. Bei den bekannten Verfahren werden die Reiblamellen des ersten Reiblamellensatzes und die Reiblamellen des zweiten Reiblamellensatzes wechselweise in axialer Richtung hintereinander an den zugehörigen Lamellenträgern drehfest angeordnet.

Ein wesentliches Qualitätskriterium einer auf die vorstehende Weise zusammengesetzten Lamellenkupplung ist die sogenannte Momentengleichförmigkeit. Zur Ermittlung der Momentengleichförmigkeit werden die das Lamellenpaket ausbildenden Reiblamellen des ersten Reiblamellensatzes und des zweiten Reiblamellensatzes in axialer Richtung mit einer vorbestimmten Kraft zusammengedrückt, während der eingangsseitige Lamellenträger um dessen Drehachse gedreht wird. Währenddessen wird das über die Reiblamellen auf den ausgangsseitigen Lamellenträger übertragene Drehmoment gemessen, um einen entsprechenden Drehmomentverlauf über der Zeit zu erhalten. Bei schwachen Schwankungen des Drehmoments wird von einer hohen Momentengleichförmigkeit gesprochen, wohingegen bei starken Schwankungen des Drehmoments von einer geringen Momentengleichförmigkeit oder gar von einer Momentenungleichförmigkeit gesprochen wird. Somit bedeutet eine geringe Momentengleichförmigkeit, dass es zu starken Schwankungen im übertragenen Drehmoment kommt, wobei diese starken Drehmomentschwankungen für die Fahrzeuginsassen als deutliches Ruckeln spürbar sind. Dies gilt es zu vermeiden.

Es ist daher eine Aufgabe der vorliegenden Erfindung, ein Verfahren zur Montage oder/und Herstellung einer reibschlüssig arbeitenden Einrichtung anzugeben, das einerseits besonders zeitsparend durchführbar ist und mittels dessen andererseits auf Anhieb eine reibschlüssig arbeitende Einrichtung geschaffen werden kann, die eine hohe Momentengleichförmigkeit aufweist. Der vorliegenden Erfindung liegt ferner die Aufgabe zugrunde, eine reibschlüssig arbeitende Einrichtung zu schaffen, die eine besonders hohe Momentengleichförmigkeit aufweist und mittels des erfindungsgemäßen Verfahrens herstellbar oder hergestellt ist. Darüber hinaus liegt der vorliegenden Erfindung die Aufgabe zugrunde, einen Reiblamellensatz für eine reibschlüssig arbeitende Einrichtung zu schaffen, der eine schnelle Montage einer reibschlüssig arbeitenden Einrichtung mit einer hohen Momentengleichförmigkeit ermöglicht.

Diese Aufgabe wird durch die in den Patentansprüchen 1, 10 bzw. 15 angegebenen Merkmale gelöst. Vorteilhafte Ausführungsformen der Erfindung sind Gegenstand der Unteransprüche.

Das erfindungsgemäße Verfahren dient der Montage oder/und Herstellung einer reibschlüssig arbeitenden Einrichtung, wobei es sich bei der reibschlüssig arbeitenden Einrichtung vorzugsweise um eine Lamellenkupplung, besonders bevorzugt um eine unter Schlupf betreibbare Lamellenkupplung handelt. Dennoch kann es sich bei der reibschlüssig arbeitenden Einrichtung auch um eine Bremseinrichtung, wie beispielsweise eine Lamellenbremse, handeln. Bei dem erfindungsgemäßen Verfahren wird zunächst ein erster Reiblamellensatz aus mehreren Reiblamellen bereitgestellt. Anschließend wird die Lamellendicke einer jeden Reiblamelle des ersten Reiblamellensatzes an mehreren Messstellen gemessen, wobei die Messstellen in Umfangsrichtung zueinander versetzt sind. So können die Messstellen beispielsweise hintereinanderliegend auf einem Kreis auf der jeweiligen Reiblamelle angeordnet sein. Das Messen der Lamellendicke kann hierbei auf jedwede Weise erfolgen, wobei es bevorzugt ist, wenn die Lamellendicke berührungslos gemessen wird, wie dies später eingehender erläutert wird. Ist die Lamellendicke der einzelnen Reiblamelle an mehreren Messstellen gemessen worden, so wird aus den genannten Messstellen jeweils eine erste Stelle, an der die Lamellendicke der einzelnen Reiblamelle am größten ist, und eine zweite Stelle, an der die Lamellendicke der einzelnen Reiblamelle am kleinsten ist, ermittelt. Nach dem Ermitteln der ersten und zweiten Stelle einer jeden Reiblamelle des ersten Reiblamellensatzes erfolgt eine Kennzeichnung der Position der ersten Stelle und der zweiten Stelle mit Hilfe von Markierungen an den Reiblamellen. Hierbei kommt jedwede Form einer Markierung in Frage, solange diese in der Lage ist, die Position der ersten Stelle und der zweiten Stelle zu kennzeichnen. So kommen beispielsweise taktil erfassbare Markierungen in Form von Kerben oder ähnliches oder visuell erfassbare Markierungen in Form von auf den Reiblamellen aufgebrachten Zeichen, wie beispielsweise Striche oder Punkte, die sich farblich oder bezüglich ihrer Form vom Rest der Reiblamelle abheben, in Frage. Die auf diese Weise markierten Reiblamellen des ersten Reiblamellensatzes werden anschließend drehfest mit einem ersten Lamellenträger der reibschlüssig arbeitenden Einrichtung verbunden. Dies bedeutet, dass alle Reiblamellen des ersten Reiblamellensatzes mit demselben Lamellenträger drehfest verbunden werden, so dass die Reiblamellen des ersten Reiblamellensatzes nach der Montage der reibschlüssig arbeitenden Einrichtung ihre relative Drehposition zueinander - abgesehen von einem etwaig vorhandenen Verzahnungsspiel - beibehalten, wenn die reibschlüssig arbeitende Einrichtung betrieben wird. So können die Reiblamellen des ersten Reiblamellensatzes beispielsweise entweder jeweils eine Außenverzahnung zum drehfesten Verbinden derselben mit einer Innenverzahnung eines Außenlamellenträgers oder eine Innenverzahnung zum drehfesten Verbinden derselben mit der Außenverzahnung eines Innenlamellenträgers aufweisen. Beim drehfesten Verbinden der Reiblamellen mit dem ersten Lamellenträger wird dabei wie folgt vorgegangen. Zunächst wird eine erste Reiblamelle des ersten Reiblamellensatzes drehfest mit dem ersten Lamellenträger verbunden. Anschließend wird eine zweite Reiblamelle des ersten Reiblamellensatzes in einer Drehposition relativ zu der benachbarten ersten Reiblamelle an dem ersten Lamellenträger angeordnet, wobei die erste Stelle der zweiten Reiblamelle in der genannten Drehposition bezogen auf die Umfangsrichtung am dichtesten an der zweiten Stelle der benachbarten ersten Reiblamelle angeordnet ist. Hierbei ist es besonders bevorzugt, wenn die zweite Reiblamelle in einer relativen Drehposition gegenüber der ersten Reiblamelle angeordnet wird, in der die erste Stelle der zweiten Reiblamelle in axialer Richtung mit der zweiten Stelle der benachbarten ersten Reiblamelle fluchtet, sofern dies aufgrund der relativen Anordnung der Verzahnungen in Relation zu den genannten Stellen möglich ist. Aus der vorangehenden Beschreibung geht hervor, dass die benachbarten Reiblamellen des ersten Reiblamellensatzes diejenigen Reiblamellen sind, die jeweils in axialer Richtung aufeinander folgen. Hierbei ist es nicht erforderlich, dass die benachbarten Reiblamellen aneinander angrenzen oder unmittelbar aufeinander folgen. Vielmehr ist es bevorzugt, wenn zwischen den einander benachbarten Reiblamellen des ersten Reiblamellensatzes eine an einem zweiten Lamellenträger drehfest angeordnete Reiblamelle eines zweiten Reiblamellensatzes angeordnet ist.

Das erfindungsgemäße Verfahren ermöglicht folglich, dass die erste Stelle der zweiten Reiblamelle, an der die Lamellendicke der zweiten Reiblamelle am größten ist, der zweiten Stelle der benachbarten ersten Reiblamelle, an der die Lamellendicke der ersten Reiblamelle am kleinsten ist, zugeordnet wird. Dabei kann sich der Monteur an den zuvor beschriebenen Markierungen orientieren. Dies hat unter anderem den Vorteil, dass sich die Lamellendickenunterschiede nicht in unvorteilhafter Weise ergänzen, vielmehr erfolgt ein Ausgleich des Lamellendickenunterschieds durch eine möglichst dichte Anordnung der ersten Stelle der zweiten Reiblamelle an der zweiten Stelle der benachbarten ersten Reiblamelle. Es hat sich ferner gezeigt, dass bei einer reibschlüssig arbeitenden Einrichtung, bei der die einander benachbarten Reiblamellen des ersten Reiblamellensatzes auf die beschriebene Weise zueinander angeordnet wurden, stets eine hohe Momentengleichförmigkeit erzielt wird. Ein nachträgliches Auseinandernehmen der reibschlüssig arbeitenden Einrichtung sowie eine Neuanordnung, Nachbearbeitung oder ein Austausch von Einzelteilen, um die gewünscht hohe Momentengleichförmigkeit zu erzielen, ist nicht mehr erforderlich. Somit ermöglicht das erfindungsgemäße Verfahren eine besonders zeitsparende Montage oder/und Herstellung einer reibschlüssig arbeitenden Einrichtung.

In einer bevorzugten Ausführungsform des erfindungsgemäßen Verfahrens wird die zweite Reiblamelle im Rahmen des Verfahrensschritts des drehfesten Verbindens der Reiblamelle mit dem ersten Lamellenträger derart in axialer Richtung orientiert angeordnet, dass die zweite Stelle der zweiten Reiblamelle bezogen auf die Umfangsrichtung am dichtesten an der ersten Stelle der benachbarten ersten Reiblamelle angeordnet ist. Unter der Orientierung der zweiten Reiblamelle in axialer Richtung wird hierbei verstanden, ob die Vorder- oder die Rückseite der zweiten Reiblamelle der ersten Reiblamelle zugewandt ist. Indem die zweite Stelle der zweiten Reiblamelle der ersten Stelle der benachbarten ersten Reiblamelle zugeordnet wird, ist auch hier ausgeschlossen, dass sich die Lamellendicken der beiden benachbarten Reiblamellen in unvorteilhafter Weise addieren, vielmehr wird ein weitgehender Ausgleich der unterschiedlichen Lamellendicken auch in diesem Bereich erreicht, so dass eine noch höhere Momentengleichförmigkeit der montierten reibschlüssig arbeitenden Einrichtung erzielt wird.

In einer vorteilhaften Ausführungsform des erfindungsgemäßen Verfahrens weisen die Reiblamellen des bereitgestellten ersten Reiblamellensatzes jeweils einen Reibbelagträger und mindestens einen Reibbelag auf der Vorder- oder/und Rückseite des Reibbelagträgers auf, wobei der Reibbelag jeweils eine Reibfläche ausbildet. Der Reibbelag kann dabei beispielsweise einstückig mit dem Reibbelagträger ausgebildet sein, es ist jedoch bevorzugt, wenn der oder die Reibbeläge nachträglich auf dem Reibbelagträger aufgebracht wurden, zumal die Herstellung der Reiblamellen hierdurch vereinfacht ist und die Vorteile des erfindungsgemäßen Verfahrens insbesondere bei Reiblamellen ausgeprägt sind, bei denen der Reibbelag nachträglich auf dem Reibbelagträger aufgebracht wurde. Der Reibbelagträger ist dabei vorzugsweise ringscheibenförmig ausgebildet und weist besonders bevorzugt eine Innenverzahnung oder eine Außenverzahnung auf, um drehfest mit dem ersten Lamellenträger verbunden werden zu können.

In einer besonders bevorzugten Ausführungsform des erfindungsgemäßen Verfahrens wird die zweite Stelle, an der die Lamellendicke der einzelnen Reiblamelle am größten ist, ausschließlich aus denjenigen Messstellen ermittelt, an denen die mindestens eine Reibfläche durchgängig ausgebildet ist. Auf diese Weise können beispielsweise auch Reibbeläge verwendet werden, in deren Reibfläche Nuten oder Vertiefungen eingepresst sind oder die derart segmentiert und voneinander beabstandet sind, dass zwischen den Reibbelagsegmenten Nuten oder Vertiefungen ausgebildet sind. Im Bereich dieser Nuten oder Vertiefungen ist die Reibfläche dann nicht durchgängig ausgebildet, so dass diejenigen Messstellen, die innerhalb der besagten Nuten oder Vertiefungen angeordnet sind, bei der Ermittlung der zweiten Stelle der jeweiligen Reiblamelle außer Betracht bleiben. Sollte sowohl ein Reibbelag auf der Vorderseite als auch auf der Rückseite des Reibbelagträgers angeordnet sein, so wird die zweite Stelle besonders bevorzugt ausschließlich aus denjenigen Messstellen ermittelt, an denen beide Reibflächen durchgängig ausgebildet sind. Bei den genannten Ausführungsformen des erfindungsgemäßen Verfahrens kann grundsätzlich auf zwei verschiedene Weisen vorgegangen werden. So könnten die Messstellen zunächst sowohl in den durchgängig ausgebildeten Bereichen als auch in den nicht durchgängig ausgebildeten Bereichen der Reibfläche angeordnet sein, um anschließend diejenigen Messstellen aus dem Messergebnis auszunehmen, an denen die Reibfläche nicht durchgängig ausgebildet ist, bevor die zweite Stelle aus den verbleibenden Messstellen ermittelt wird. Alternativ könnte die Messung der Lamellendicke von vorneherein auf diejenigen Messstellen begrenzt werden, an denen die mindestens eine Reibfläche durchgängig ausgebildet ist. Unabhängig von der jeweiligen Vorgehensweise ermöglicht das Verfahren in dieser besonders bevorzugten Ausführungsform der Erfindung auch das Ausmessen sowie die Montage von Reiblamellen, deren Reibbelag Kühlölnuten oder -vertiefungen aufweist oder unter Ausbildung von Kühlölnuten oder - vertiefungen auf dem Reibbelagträger aufgebracht ist.

In einer besonders bevorzugten Ausführungsform des erfindungsgemäßen Verfahrens werden der Reibbelag oder/und die Reibfläche der Reiblamellen des ersten Reiblamellensatzes vor dessen Bereitstellung mit demselben Werkzeug erzeugt, aufgebracht oder/und endbearbeitet. Da das Werkzeug zur Erzeugung, Aufbringung oder/und Endbearbeitung des Reibbelags oder/und der Reibfläche der Reiblamellen des ersten Reiblamellensatzes einen maßgeblichen Einfluss auf die später zu messende Lamellendicke der Reiblamellen hat, wird durch Verwendung desselben Werkzeugs weitgehend sichergestellt, dass die relative Anordnung der ersten Stelle zu der zweiten Stelle bei jeder Reiblamelle des ersten Reiblamellensatzes dieselbe ist. Aufgrund dieser gleich bleibenden relativen Anordnung zwischen erster und zweiter Stelle bei jeder Reiblamelle des ersten Reiblamellensatzes können die ersten und zweiten Stellen zweier benachbarter Reiblamellen des ersten Reiblamellensatzes einander besonders genau zugeordnet werden. Sind die Reibbeläge oder/und die Reibflächen der Reiblamellen des ersten Reiblamellensatzes für eine einzelne reibschlüssig arbeitende Einrichtung durch annähernd gleiche, jedoch nicht dieselben Werkzeuge erzeugt, aufgebracht oder/und endbearbeitet, so ist dies in der Regel nicht möglich. Im Rahmen dieser besonders bevorzugten Ausführungsform sollte demzufolge darauf geachtet werden, dass der Reibbelag oder/und die Reibfläche der Reiblamellen des ersten Reiblamellensatzes, der für eine einzelne reibschlüssig arbeitende Einrichtung verwendet wird, durch dasselbe Werkzeug erzeugt, aufgebracht oder/und endbearbeitet wurde. Zu diesem Zweck können beispielsweise die Reiblamellen bei deren Herstellung mit der entsprechenden Werkzeugnummer gekennzeichnet werden. Bei einem Werkzeugwechsel oder auch bei einer Nachbearbeitung des Werkzeugs sollte sich die Kennzeichnung entsprechend ändern, da es sich dann nicht um dasselbe Werkzeug im Sinne dieser bevorzugten Ausführungsform handelt.

Um sicherzustellen, dass es sich bei der ermittelten ersten Stelle tatsächlich um diejenige Stelle, an der die Lamellendicke der gesamten Reiblamelle am größten ist, und bei der zweiten Stelle um diejenige Stelle handelt, an der die Lamellendicke der gesamten Reiblamelle am kleinsten ist, erfolgt das Messen der Lamellendicke in einer weiteren bevorzugten Ausführungsform des erfindungsgemäßen Verfahrens über den gesamten Bereich der jeweiligen Reiblamelle, in dem die mindestens eine Reibfläche durchgängig ausgebildet ist. Auf diese Weise wird die Lamellendicke in sämtlichen relevanten Bereichen der jeweiligen Reiblamelle ermittelt.

Die vorstehend beschriebene Ausführungsform ermöglicht eine besonders genaue Bestimmung der dicksten bzw. dünnsten Stelle der einzelnen Reiblamelle, ist jedoch relativ aufwendig. Um die Messung der Lamellendicke und das spätere Ermitteln der ersten und zweiten Stelle zu vereinfachen, erfolgt das Messen der Lamellendicke in einer besonders vorteilhaften Ausführungsform des erfindungsgemäßen Verfahrens an Messstellen, die auf einem Kreis in Umfangsrichtung hintereinanderliegend, vorzugsweise im gleichen Abstand hintereinanderliegend angeordnet sind, wobei dieser Kreis nicht notgedrungen kreisrund ausgebildet sein muss, wenngleich dies bevorzugt ist. Bei dieser Ausführungsform erfolgt das Messen der Lamellendicke somit nicht über die gesamte Breite des Reibbelages in radialer Richtung, sondern vielmehr lediglich entlang eines Kreises in Umfangsrichtung. Diese Vorgehensweise hat sich als vorteilhaft herausgestellt, zumal die Dickenunterschiede der Reiblamelle in radialer Richtung in der Regel gering sind, so dass bereits lediglich eine Messstelle auf derselben Radialen ausreichend ist. Diese Tatsache sowie die Beabstandung der Messstellen in Umfangsrichtung zueinander bewirkt, dass die Gesamtzahl der Messstellen reduziert und das Ermitteln der ersten und zweiten Stelle vereinfacht ist. So hat es sich in Einzelfällen als vorteilhaft erwiesen, wenn das Messen lediglich an mindestens 28 Messstellen entlang des genannten Kreises erfolgt, wobei die Anzahl der Messstellen stets anhand des Radius des Kreises festgelegt werden sollte, d. h. je größer der Radius des Kreises ist, um so mehr Messstellen sollten festgelegt werden. Als besonders vorteilhaft hat sich jedoch eine Vorgehensweise herausgestellt, bei der das Messen durchgehend entlang des Kreises erfolgt, zumal hierdurch einerseits im Gegensatz zu der flächigen Messung der Lamellendicke die Anzahl der Messstellen auf ein vernünftiges Maß reduziert werden konnte und andererseits eine relativ exakte Ermittlung derjenigen Stellen der einzelnen Reiblamelle möglich ist, an denen die Lamellendicke tatsächlich am größten bzw. am kleinsten ist.

In einer weiteren vorteilhaften Ausführungsform des erfindungsgemäßen Verfahrens erfolgt das Messen der Lamellendicke berührungslos. Auf diese Weise wird zum einen verhindert, dass es durch das Messen der Lamellendicke zu einer Beschädigung des Reibbelags bzw. der Reibfläche kommt, zumal die Reibbeläge in der Regel von organischen Papierreibbelägen gebildet sind. Zum anderen kann die Messung der Lamellendicke unabhängig davon, ob es sich bei dem Reibbelag um einen Papierreibbelag handelt oder ob gar kein Reibbelag vorgesehen ist, wesentlich schneller durchgeführt werden, zumal kein Heranfahren eines Messkopfes erforderlich ist. Hierbei hat sich eine Lasermessung als besonders vorteilhaft herausgestellt. Hierbei ist es besonders bevorzugt, wenn die Messung an jeder einzelnen Messstelle mittels beidseitiger Lasermessung erfolgt. Bei der beidseitigen Lasermessung sind Messfehler, die auf eine ungleichmäßige Bewegung des Werkstücks, sprich der Reiblamelle, oder des Messwerkzeugs zurückzuführen sind, weitgehend ausgeschlossen, so dass eine besonders exakte Messung der Lamellendicke an den einzelnen Messstellen möglich ist. Unabhängig von der gewählten Vorgehensweise ist es von Vorteil, wenn die einzelne Reiblamelle relativ zu dem Messwerkzeug verfahren wird, während das Messwerkzeug ortsfest angeordnet ist. So kann die einzelne Reiblamelle beispielsweise mit einem Spannmittel festgelegt werden, um die einzelne Reiblamelle anschließend um deren Drehachse zu drehen.

Um die Montage der Reiblamellen sowie das Auffinden der relativen Drehposition der benachbarten Reiblamellen untereinander zu vereinfachen, erfolgt das Kennzeichnen der Position der ersten Stelle und der zweiten Stelle in einer weiteren bevorzugten Ausführungsform des erfindungsgemäßen Verfahrens mit Hilfe von Markierungen an den Reiblamellen, die sich bis zu einem Innenrand oder Außenrand der Reiblamellen erstrecken. Auf diese Weise kann der Monteur die entsprechende Markierung selbst dann noch erkennen, wenn bereits eine Reiblamelle an einem anderen bzw. zweiten Lamellenträger drehfest angeordnet wurde, die die Reiblamelle des ersten Reiblamellensatzes in axialer Richtung teilweise verdeckt. Es ist daher besonders bevorzugt, wenn sich die Markierungen bis zu demjenigen Rand der Reiblamellen erstrecken, der dem ersten Lamellenträger zugewandt ist. Je nach Ausführungsform der Reiblamellen des ersten Reiblamellensatzes wird es sich demzufolge um denjenigen Rand handeln, an dem die Außen- oder Innenverzahnung der Reiblamellen des ersten Reiblamellensatzes vorgesehen ist. Als besonders einfach erkennbare Markierung hat sich in diesem Zusammenhang eine linienförmige Markierung herausgestellt, die sich entlang einer Radialen durch die erste bzw. zweite Stelle bis zu dem Innen- oder Außenrand der Reiblamellen erstreckt.

Gemäß einer weiteren vorteilhaften Ausführungsform des erfindungsgemäßen Verfahrens wird ferner ein zweiter Reiblamellensatz aus mehreren Reiblamellen bereitgestellt. Bei den Reiblamellen des zweiten Reiblamellensatzes handelt es sich vorzugsweise um Stahllamellen, wobei es besonders bevorzugt ist, wenn diese Stahllamellen nicht mit einem zusätzlichen Reibbelag versehen sind. Anschließend werden die Reiblamellen des zweiten Reiblamellensatzes drehfest mit einem zweiten Lamellenträger derart verbunden, dass die Reiblamellen des zweiten Reiblamellensatzes jeweils in axialer Richtung zwischen den, vorzugsweise allen, einander benachbarten Reiblamellen des ersten Reiblamellensatzes angeordnet sind. Somit werden auch die Reiblamellen des zweiten Reiblamellensatzes an demselben Lamellenträger, nämlich dem zweiten Lamellenträger, der dem ersten Lamellenträger zugeordnet ist, drehfest befestigt, so dass diese ihre relative Drehposition zueinander auch während des Betriebes der auf diese Weise hergestellten reibschlüssig arbeitenden Einrichtung im Wesentlichen beibehalten.

In einer weiteren besonders bevorzugten Ausführungsform des erfindungsgemäßen Verfahrens werden die einander benachbarten Reiblamellen des zweiten Reiblamellensatzes auf dieselbe Weise relativ zueinander angeordnet wie die einander benachbarten Reiblamellen des ersten Reiblamellensatzes. Dies bedeutet, dass die vorangehenden Ausführungen zur Montage der Reiblamellen des ersten Reiblamellensatzes entsprechend auch für die Montage der Reiblamellen des zweiten Reiblamellensatzes gelten, wobei bezüglich der Vorteile auf die vorangehende Beschreibung verwiesen sein soll.

Die erfindungsgemäße reibschlüssig arbeitende Einrichtung ist nach dem erfindungsgemäßen Verfahren herstellbar oder hergestellt. Bei der reibschlüssig arbeitenden Einrichtung handelt es sich vorzugsweise um eine Lamellenkupplung, besonders bevorzugt um eine unter Schlupf betreibbare Lamellenkupplung. Die reibschlüssig arbeitende Einrichtung weist einen ersten Reiblamellensatz auf, dessen Reiblamellen in axialer Richtung hintereinander drehfest an einem ersten Lamellenträger angeordnet sind. Die Reiblamellen des ersten Reiblamellensatzes sind somit hintereinander drehfest an demselben Lamellenträger angeordnet, nämlich dem ersten Lamellenträger, und haben somit eine im Wesentlichen festgelegte Drehposition zueinander. Die Reiblamellen des ersten Reiblamellensatzes weisen jeweils eine erste Stelle, an der die Lamellendicke am größten ist, und eine zweite Stelle auf, an der die Lamellendicke am kleinsten ist. Wie bereits unter Bezugnahme auf das erfindungsgemäße Verfahren erläutert, muss es sich bei der ersten und zweiten Stelle nicht notgedrungen um eine Stelle handeln, an der die Reiblamelle absolut am größten bzw. kleinsten ist, vielmehr können die erste und zweite Stelle auch aus vereinzelten Messstellen ermittelt worden sein. Erfindungsgemäß ist jeweils eine zweite Reiblamelle des ersten Reiblamellensatzes in einer Drehposition relativ zu einer benachbarten ersten Reiblamelle des ersten Reiblamellensatzes angeordnet, in der die erste Stelle der zweiten Reiblamelle bezogen auf die Umfangsrichtung am dichtesten an der zweiten Stelle der benachbarten ersten Reiblamelle angeordnet ist. Bezüglich der Vorteile der erfindungsgemäßen reibschlüssig arbeitenden Einrichtung sowie der Vorteile der nachstehend beschriebenen Ausführungsformen dieser Einrichtung sei auf die vorangehende Beschreibung des erfindungsgemäßen Verfahrens verwiesen, die diesbezüglich entsprechend gilt.

In einer bevorzugten Ausführungsform der erfindungsgemäßen reibschlüssig arbeitenden Einrichtung ist die zweite Reiblamelle ferner derart in axialer Richtung orientiert an dem ersten Lamellenträger drehfest angeordnet, dass die zweite Stelle der zweiten Reiblamelle bezogen auf die Umfangsrichtung am dichtesten an der ersten Stelle der benachbarten ersten Reiblamelle angeordnet ist.

In einer vorteilhaften Ausführungsform der erfindungsgemäßen reibschlüssig arbeitenden Einrichtung weisen die Reiblamellen des ersten Reiblamellensatzes jeweils einen, vorzugsweise ringscheibenförmigen Reibbelagträger und mindestens einen Reibbelag auf der Vorder- oder/und Rückseite des Reibbelagträgers mit einer Reibfläche auf, wobei die zweite Stelle eine Stelle ist, an der die mindestens eine Reibfläche durchgängig ausgebildet ist. Bezüglich des Begriffs durchgängig sei hier wiederum auf die vorangehende Beschreibung des erfindungsgemäßen Verfahrens verwiesen.

In einer weiteren bevorzugten Ausführungsform der erfindungsgemäßen reibschlüssig arbeitenden Einrichtung wurden der Reibbelag oder/und die Reibfläche der Reiblamellen des ersten Reiblamellensatzes mit demselben Werkzeug erzeugt, aufgebracht oder/und endbearbeitet.

In einer besonders bevorzugten Ausführungsform der erfindungsgemäßen reibschlüssig arbeitenden Einrichtung ist ferner ein zweiter Reiblamellensatz vorgesehen, dessen Reiblamellen, die vorzugsweise als Stahllamellen ausgebildet sind und besonders bevorzugt keinen nachträglich aufgebrachten Reibbelag aufweisen, jeweils in axialer Richtung zwischen den, vorzugsweise zwischen allen einander benachbarten Reiblamellen des ersten Reiblamellensatzes und drehfest an einem zweiten Lamellenträger angeordnet sind. Es ist hierbei besonders bevorzugt, wenn die einander benachbarten Reiblamellen des zweiten Reiblamellensatzes auf dieselbe Weise relativ zueinander angeordnet sind wie die einander benachbarten Reiblamellen des ersten Reiblamellensatzes, um eine hohe Momentengleichförmigkeit zu erreichen.

Der erfindungsgemäße Reiblamellensatz für eine reibschlüssig arbeitende Einrichtung, vorzugsweise für eine Lamellenkupplung, besonders bevorzugt für eine unter Schlupf betreibbare Lamellenkupplung, umfasst mehrere Reiblamellen, die drehfest an einem ersten Lamellenträger befestigt werden können, d. h. die Reiblamellen des ersten Reiblamellensatzes sind derart ausgebildet, dass diese an demselben Lamellenträger drehfest befestigt werden können. Die Reiblamellen weisen jeweils eine erste Stelle, an der die Lamellendicke am größten ist, und eine zweite Stelle auf, an der die Lamellendicke am kleinsten ist. Auch bei dem erfindungsgemäßen Reiblamellensatz gilt, dass die erste und zweite Stelle keine Stelle sein muss, an der die Reiblamelle absolut am größten bzw. kleinsten ist, vielmehr können die erste und zweite Stelle auch aus vereinzelten Messstellen ermittelt worden sein. Erfindungsgemäß ist die Position der ersten Stelle und der zweiten Stelle mit Hilfe von Markierungen an den Reiblamellen gekennzeichnet. Mit Hilfe eines derartigen Reiblamellensatzes kann somit die Montage der reibschlüssig arbeitenden Einrichtung vereinfacht werden, wobei gleichermaßen eine hohe Momentengleichförmigkeit erzielt wird, wenn die einander benachbarten Reiblamellen des ersten Reiblamellensatzes auf die zuvor beschriebene Weise relativ zueinander an dem ersten Lamellenträger befestigt werden.

Um die Sichtbarkeit bzw. Erkennbarkeit der Markierungen zu erhöhen, selbst wenn die einzelne Reiblamelle bereits an dem ersten Lamellenträger befestigt ist, erstrecken sich die Markierungen in einer bevorzugten Ausführungsform des erfindungsgemäßen Reiblamellensatzes bis zu einem Innenrand oder Außenrand der Reiblamellen, besonders bevorzugt bis zu demjenigen Rand der Reiblamellen, der dem ersten Lamellenträger zugewandt ist.

Im Übrigen ist es vorteilhaft, wenn der Reiblamellensatz gänzlich oder teilweise auf die unter Bezugnahme auf das erfindungsgemäße Verfahren sowie die erfindungsgemäße reibschlüssig arbeitende Einrichtung beschriebene Weise ausgebildet ist, wobei bezüglich der Vorteile auf die vorstehende Beschreibung verwiesen wird.

Die Erfindung wird im Folgenden anhand einer beispielhaften Ausführungsform unter Bezugnahme auf die beigefügten Zeichnungen näher erläutert. Es zeigen:
- Fig. 1: eine Vorderansicht einer Reiblamelle des erfindungsgemäßen Reiblamellensatzes,
- Fig. 2: einen Querschnitt entlang der Schnittlinie A-A von Fig. 1,
- Fig. 3: ein Diagramm zur Veranschaulichung des Messerergebnisses aus der Messung der Lamellendicke und
- Fig. 4: eine perspektivische Darstellung eines ersten und zweiten Reiblamellensatzes zur Veranschaulichung des erfindungsgemäßen Verfahrens zur Montage oder/und Herstellung der erfindungsgemäßen reibschlüssig arbeitenden Einrichtung.

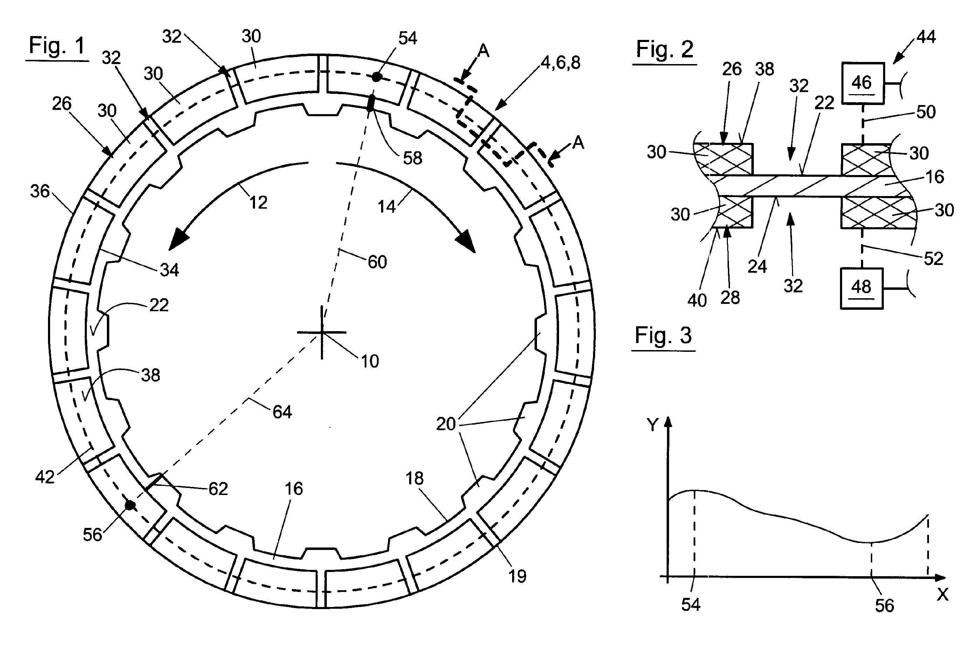

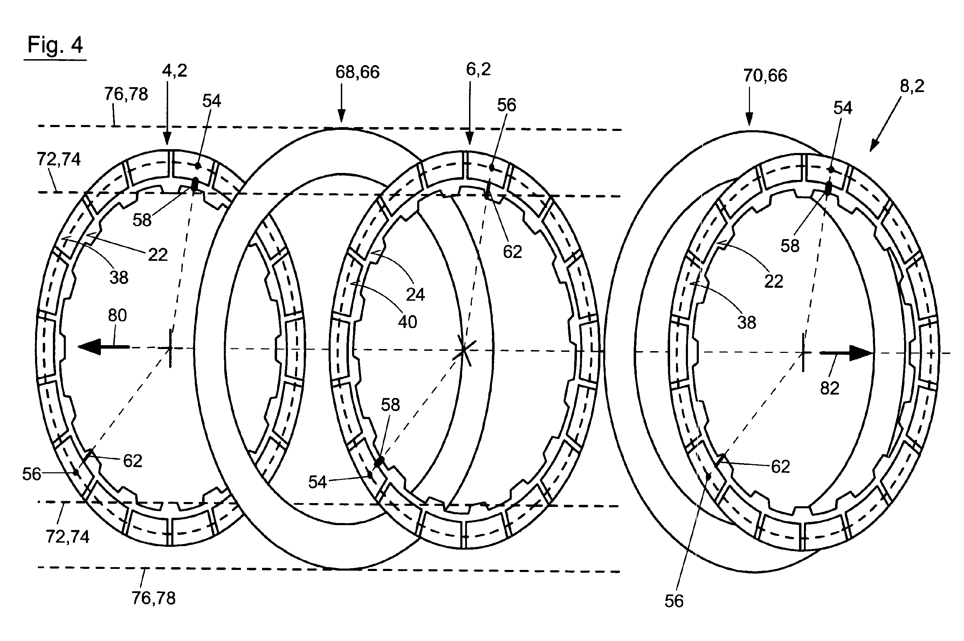

Das erfindungsgemäße Verfahren dient der Montage oder/und Herstellung einer reibschlüssig arbeitenden Einrichtung, vorzugsweise einer Lamellenkupplung, besonders bevorzugt einer unter Schlupf betreibbaren Lamellenkupplung. In einem ersten Verfahrensschritt wird ein erster Reiblamellensatz 2 bereitgestellt, der sich aus einer Vielzahl von Reiblamellen 4, 6, 8 zusammensetzt, wie dies in Fig. 4 angedeutet ist, wobei die Reiblamelle 4, 6, 8 des ersten Reiblamellensatzes 2 in Fig. 1 in einer Vorderansicht gezeigt ist. Nachstehend wird der Aufbau der Reiblamelle 4 des ersten Reiblamellensatzes 2 beschrieben, wobei die Beschreibung entsprechend auch für die anderen Reiblamellen 6, 8 des ersten Reiblamellensatzes 2 gilt.

Die Reiblamelle 4 weist eine Drehachse 10 auf, wobei in Fig. 1 ferner die einander entgegengesetzten Umfangsrichtungen 12, 14 anhand entsprechender Pfeile angedeutet sind. Die im Wesentlichen ringscheibenförmig ausgebildete Reiblamelle 4 weist einen ringscheibenförmigen Reibbelagträger 16 auf, der vorzugsweise als stählerne Ringscheibe ausgebildet ist. Aufgrund der ringscheibenförmigen Ausbildung des Reibbelagträgers 16 weist dieser einen Innenrand 18, der in radialer Richtung nach innen weist, und einen Außenrand 19 auf, wobei letzterer in radialer Richtung nach außen weist. Am Innenrand 18 des Reibbelagträgers 16 ist ferner eine Innenverzahnung 20 ausgebildet, so dass die Reiblamelle 4 in der vorliegenden Ausführungsform als Innenlamelle ausgebildet ist, die drehfest mit einem Innenlamellenträger (nicht dargestellt) verbunden werden kann. Darüber hinaus weist der Reibbelagträger 16 eine Vorderseite 22, die dem Betrachter von Fig. 1 zugewandt ist, sowie eine Rückseite 24 auf, die dem Betrachter von Fig. 1 abgewandt, jedoch in Fig. 2 zu erkennen ist.

Auf der Vorderseite 22 des Reibbelagträgers 16 ist ein ringförmiger Reibbelag 26 angeordnet, während auf der Rückseite 24 ein ringförmiger Reibbelag 28 befestigt ist, wobei letzterer insbesondere in Fig. 2 zu erkennen ist. Bei den beiden Reibbelägen 26, 28 handelt es sich um nachträglich auf dem Reibbelagträger 16 angebrachte Papierreibbeläge, wobei die Reibbeläge 26, 28 jeweils aus mehreren Reibbelagsegmenten 30 zusammengesetzt sind. Die Reibbelagsegmente 30 sind dabei derart auf dem Reibbelagträger 16 angebracht, dass zwischen den Reibbelagsegmenten 30 Kühlölnuten 32 ausgebildet sind, die sich bei der vorliegenden Ausführungsform jeweils entlang einer Radialen nach außen erstrecken. Dabei erstrecken sich die Kühlölnuten 32 von einem Innenrand 34 des Reibbelags 26, 28 zu einem Außenrand 36 des Reibbelags 26, 28, wobei sich der gegenüber dem Innenrand 18 des Reibbelagträgers 16 radial nach außen versetzte Innenrand 34 entlang eines Kreises mit dem Radius r₁ erstreckt, während sich der Außenrand 36 entlang eines Kreises mit dem Radius r₂ erstreckt. Im vorliegenden Beispiel ist auch der Außenrand 19 des Reibbelagträgers 16 entlang des Kreises des Außenrandes 36 angeordnet. Die beiden Reibbeläge 26, 28 bilden jeweils eine dem Reibbelagträger 16 abgewandte Reibfläche 38, 40 aus. Dabei sind die Reibflächen 38, 40 im Bereich der Reibbelagsegmente 30 durchgängig ausgebildet, während die Reibflächen 38, 40 im Bereich der Kühlölnuten 32 unterbrochen und somit nicht durchgängig ausgebildet sind. Die Reibbeläge 26, 28 oder/und die zugehörigen Reibflächen 38, 40 wurden jeweils mit demselben Werkzeug auf dem Reibbelagträger 16 aufgebracht oder/und endbearbeitet.

Nach dem Bereitstellen des ersten Reiblamellensatzes 2 aus den Reiblamellen 4, 6, 8 wird die Lamellendicke der Reiblamellen 4, 6, 8 des ersten Reiblamellensatzes 2 an mehreren Messstellen gemessen, die in Umfangsrichtung 12, 14 zueinander versetzt sind. In der dargestellten Ausführungsform sind die Messstellen in Umfangsrichtung 12, 14 hintereinanderliegend auf einem Kreis 42 angeordnet, der in Fig. 1 gestrichelt angedeutet ist. Der Kreis 42 ist konzentrisch mit dem kreisförmigen Innen- und Außenrand 34, 36 der Reibbeläge 26, 28 angeordnet. Dabei weist der Kreis 42 einen Radius r₃ auf. Für den Radius r₃ gilt vorzugsweise r₃ = (r₁ + r₂) / 2, so dass es sich bei dem Kreis 42 um einen Mittelkreis des Reibbelags 26, 28 handelt und die Messstellen bezogen auf die radiale Richtung jeweils in der Mitte des Reibbelags 26, 28 angeordnet sind. Die Messstellen auf dem Kreis 42 sind dabei vorzugsweise im gleichen Abstand in Umfangsrichtung 12, 14 hintereinanderliegend angeordnet, wobei das Messen vorzugsweise an mindestens 28 Messstellen erfolgen sollte. In der vorliegenden Ausführungsform kann das Messen der Lamellendicke jedoch auch durchgehend entlang des Kreises 42 in Umfangsrichtung 12, 14 erfolgen.

Das Messen der Lamellendicke erfolgt berührungslos, um das Messen zu beschleunigen und um zu verhindern, dass die Reibbeläge 26, 28 - insbesondere im Bereich der Kühlölnuten 32 - beschädigt werden. In dem gezeigten Beispiel erfolgt die Messung der Lamellendicke mittels einer beidseitigen Lasermessung. So zeigt Fig. 2 eine entsprechende Lasermesseinrichtung 44, die zwei Laser 46, 48 aufweist. Während der Laser 46 mittels eines Laserstrahls 50 den Abstand der Vorderseite der Reiblamelle 4 zu dem Laser 46 ermittelt, ermittelt der Laser 48 den Abstand der Rückseite der Reiblamelle 4 gegenüber dem Laser 48 mit Hilfe eines Laserstrahls 52. Da der Abstand der beiden Laser 46, 48 zueinander bekannt ist, lässt sich aus den ermittelten Abständen die Lamellendicke der Reiblamelle 4 an den jeweiligen Messstellen entlang des Kreises 42 ermitteln.

Das Ergebnis der Messung der Lamellendicke entlang des Kreises 42 ist in Fig. 3 anhand eines Diagramms beispielhaft dargestellt. In dem Diagramm nach Fig. 3 ist der Verlauf der Lamellendicke entlang des Kreises 42 dargestellt, wobei auf der X-Achse die aufeinander folgenden Messstellen aufgetragen sind, während auf der Y-Achse die ermittelte Lamellendicke an der jeweiligen Messstelle aufgetragen ist. Wie aus Fig. 3 ersichtlich, sind die Lamellendicken im Bereich derjenigen Messstellen, die innerhalb der Kühlölnuten 32 angeordnet sind, nicht in das Messergebnis eingeflossen. Dies kann entweder dadurch bewirkt werden, dass keine Messung im Bereich der in den Kühlölnuten 32 angeordneten Messstellen durchgeführt wurde oder dass die Messstellen innerhalb der Kühlölnuten 32 nachträglich herausgefiltert wurden.

Aus den Messstellen wird nunmehr eine erste Stelle 54, an der die Lamellendicke der einzelnen Reiblamelle 4 am größten ist, und eine zweite Stelle 56 ermittelt, an der die Lamellendicke der einzelnen Reiblamelle 4 am kleinsten ist. Da das Messen der Lamellendicke entweder nur an denjenigen Messstellen durchgeführt wurde, an denen die Reibflächen 38, 40 durchgängig ausgebildet sind, oder die Messstellen, an denen die Reibflächen 38, 40 nicht durchgängig ausgebildet sind, nachträglich herausgefiltert wurden, kann die zweite Stelle 56 ausschließlich aus denjenigen Messstellen ermittelt werden, an denen die Reibflächen 38, 40 durchgängig ausgebildet sind. Hierdurch wird eine Verfälschung des Messergebnisses und der Ermittlung der zweiten Stelle 56 aufgrund der Kühlölnuten 32 vermieden.

Nach der Ermittlung der ersten und zweiten Stelle 54, 56 wird die Position der ersten Stelle 54 und der zweiten Stelle 56 gekennzeichnet. Zur Kennzeichnung der ersten Stelle 54 wird eine erste Markierung 58 an der Reiblamelle 4 angebracht. Die erste Markierung 58 ist sowohl auf der Vorderseite als auch auf der Rückseite der Reiblamelle 4 angeordnet und erstreckt sich im vorliegenden Beispiel entlang einer Radialen 60, wobei sich die Radiale 60 durch die erste Stelle 54 erstreckt. Die erste Markierung 58 wird dabei derart angebracht, dass sich diese bis zu demjenigen Rand der Reiblamelle 4 erstreckt, der dem Lamellenträger, an dem die Reiblamelle 4 drehfest befestigt werden kann, zugewandt ist. Dies ist im vorliegenden Beispiel der Innenrand 18 der Reiblamelle 4 bzw. des Reibbelagträgers 16. Die erste Markierung 58 ist dabei im Wesentlichen linienförmig ausgebildet.

Des Weiteren wird die Position der zweiten Stelle 56 mit Hilfe einer zweiten Markierung 62 an der Reiblamelle 4 gekennzeichnet, wobei die zweite Markierung 62 ebenfalls auf der Vorder- und Rückseite der Reiblamelle 4 vorgesehen ist. Die zweite Markierung 62 erstreckt sich ebenfalls linienförmig entlang einer Radialen 64, die sich durch die zweite Stelle 56 erstreckt. Auch die zweite Markierung 62 erstreckt sich bis zu demjenigen Rand der Reiblamelle 4, der dem Lamellenträger, mit dem die Reiblamelle 4 drehfest verbunden werden kann, zugewandt ist, also auch in diesem Fall bis zu dem Innenrand 18 der Reiblamelle 4 bzw. des Reibbelagträgers 16.

Um die später näher beschriebene relative Anordnung der Reiblamellen 4, 6, 8 zu vereinfachen, sollten die Markierungen 58, 62 voneinander unterscheidbar sein, was beispielsweise durch unterschiedliche Formen, Farben oder Größen bewirkt werden kann. Darüber hinaus sollten die Markierungen 58, 62 jeweils sowohl auf der Vorderseite und der Rückseite erkennbar bzw. aufgebracht sein, falls sich die Orientierung der einzelnen Reiblamelle 4, 6, 8 in axialer Richtung während der Montage ändern sollte.

Im Rahmen dieser Ausführungsform des erfindungsgemäßen Verfahrens wird ferner ein zweiter Reiblamellensatz 66 bereitgestellt, der sich aus mehreren Reiblamellen 68, 70 zusammensetzt, wie dies aus Fig. 4 ersichtlich ist. Die Reiblamellen 68, 70 des bereitgestellten zweiten Reiblamellensatzes 66 sind als Stahllamellen ausgebildet, auf denen keinerlei Reibbelag angeordnet ist. Vielmehr bildet die Stahllamelle selbst die jeweilige Reibfläche der Reiblamellen 68, 70 aus. Im Gegensatz zu den Reiblamellen 4, 6, 8 des ersten Reiblamellensatzes 2 weisen die Reiblamellen 68, 70 des zweiten Reiblamellensatzes 66 eine nicht dargestellte Außenverzahnung auf, um mit einem anderen Lamellenträger drehfest verbunden werden zu können. Im Übrigen ist es bevorzugt, wenn die Reiblamellen 68, 70 des zweiten Reiblamellensatzes 66 auf dieselbe Weise wie die Reiblamellen 4, 6, 8 des ersten Reiblamellensatzes 2 vermessen und markiert werden.

Der auf die vorangehend beschriebene Weise erhaltene erste bzw. zweite Reiblamellensatz 2, 66 bildet somit eine Ausführungsform des erfindungsgemäßen Reiblamellensatzes aus.

Der weitere Verlauf des erfindungsgemäßen Verfahrens in dieser Ausführungsform wird nachstehend eingehender unter Bezugnahme auf Fig. 4 beschrieben, wobei in Fig. 4 der Lamellentragabschnitt 72 eines ersten Lamellenträgers 74, der als Innenlamellenträger ausgebildet ist, anhand gestrichelter Linien angedeutet ist. Ferner ist ein Lamellentragabschnitt 76 eines zweiten Lamellenträgers 78, der als Außenlamellenträger ausgebildet ist, anhand gestrichelter Linien angedeutet. Darüber hinaus sind in Fig. 4 die beiden einander entgegengesetzten axialen Richtungen 80, 82 der zu montierenden reibschlüssig arbeitenden Einrichtung anhand von Pfeilen angedeutet, die sich in Richtung der Drehachse 10 der Reiblamellen 4, 6, 8 erstrecken.

Zunächst wird die Reiblamelle 4 des ersten Reiblamellensatzes 2 in Längsrichtung 80 auf den Lamellentragabschnitt 72 des ersten Lamellenträgers 74 aufgeschoben, so dass eine drehfeste Verbindung der nachstehend auch als erste Reiblamelle 4 bezeichneten Reiblamelle 4 mit dem ersten Lamellenträger 74 entsteht. Im Anschluss daran wird die Reiblamelle 68 des zweiten Reiblamellensatzes 66 in Längsrichtung 80 in den Lamellentragabschnitt 76 des zweiten Lamellenträgers 78 eingeschoben, so dass eine drehfeste Verbindung der Reiblamelle 68 mit dem zweiten Lamellenträger 78 bewirkt wird. Anschließend wird die Reiblamelle 6 des ersten Reiblamellensatzes 2, die nachstehend auch als zweite Reiblamelle 6 bezeichnet wird, auf den Lamellentragabschnitt 72 des ersten Lamellenträgers 74 in Längsrichtung 80 aufgeschoben. Bevor dies jedoch geschieht, wird die zweite Reiblamelle 6 in eine Drehposition relativ zu der benachbarten ersten Reiblamelle 4 des ersten Reiblamellensatzes 2 gedreht, in der die erste Stelle 54 der zweiten Reiblamelle 6 bezogen auf die Umfangsrichtung 12, 14 am dichtesten an der zweiten Stelle 56 der benachbarten ersten Reiblamelle 4 angeordnet ist. Bei der Ermittlung dieser relativen Drehposition der zweiten Reiblamelle 6 gegenüber der ersten Reiblamelle 4 kann sich der Monteur an der Markierung 58 an der zweiten Reiblamelle 6 sowie der Markierung 62 an der ersten Reiblamelle 4 orientieren. Der besondere Vorteil der Markierung 62, die sich bis zu dem Innenrand 18 der ersten Reiblamelle 4 erstreckt, besteht darin, dass diese nicht vollständig in axialer Richtung 80, 82 von der Reiblamelle 68 des zweiten Reiblamellensatzes 66 verdeckt ist.

Ist die günstigste Drehposition auf die vorstehend genannte Weise ermittelt, so prüft der Monteur oder eine entsprechende Montagevorrichtung ferner, ob auch die zweite Stelle 56 der zweiten Reiblamelle 6 bezogen auf die Umfangsrichtung 12, 14 am dichtesten an der ersten Stelle 54 der benachbarten ersten Reiblamelle 4 angeordnet ist. Sollte dies nicht der Fall sein, so ändert der Monteur oder die Montagevorrichtung die Orientierung der zweiten Reiblamelle 6 in axialer Richtung 80, 82. Dies bedeutet, dass entweder die Vorderseite 22 der zweiten Reiblamelle 6 oder die Rückseite 24 der zweiten Reiblamelle 6 der ersten Reiblamelle 4 zugewandt wird. Ist die zweite Reiblamelle 6 dann derart in axialer Richtung 80, 82 orientiert, dass die zweite Stelle 56 der zweiten Reiblamelle 6 bezogen auf die Umfangsrichtung 12, 14 am dichtesten an der ersten Stelle 54 der benachbarten ersten Reiblamelle 4 angeordnet ist, so wird die zweite Reiblamelle 6 in Längsrichtung 80 auf den Lamellentragabschnitt 72 des ersten Lamellenträgers 74 aufgeschoben, so dass auch zwischen dem ersten Lamellenträger 74 und der zweiten Reiblamelle 6 eine drehfeste Verbindung bewirkt ist. Somit sind die beiden Reiblamellen 4, 6 des ersten Reiblamellensatzes 2 mit demselben Lamellenträger, nämlich dem ersten Lamellenträger 74, drehfest verbunden, so dass sich deren relative Drehposition zueinander auch während des Betriebes der montierten reibschlüssig arbeitenden Einrichtung nicht mehr ändert, abgesehen von einem etwaigen Verzahnungsspiel.

Anschließend wird die Reiblamelle 70 des zweiten Reiblamellensatzes 66 in Längsrichtung 80 in den Lamellentragabschnitt 76 des zweiten Lamellenträgers 78 eingeschoben, wobei auch hier die relative Drehposition gegenüber der Reiblamelle 68 des zweiten Reiblamellensatzes 66 sowie die Orientierung der Reiblamelle 70 in axialer Richtung 80, 82 zuvor auf die unter Bezugnahme auf die Reiblamellen 4, 6 des ersten Reiblamellensatzes 2 beschriebene Weise ermittelt und hergestellt werden sollte.

Anschließend können weitere Reiblamellen 8 des ersten Reiblamellensatzes 2 sowie weitere Reiblamellen des zweiten Reiblamellensatzes 66 in axialer Richtung 80, 82 aufeinander folgend drehfest mit dem jeweiligen Lamellenträger 74, 78 verbunden werden, so dass die Reiblamellen 68, 70 des zweiten Reiblamellensatzes 66 jeweils in Längsrichtung 80, 82 zwischen den, vorzugsweise allen einander benachbarten Reiblamellen 4, 6, 8 des ersten Reiblamellensatzes 2 angeordnet sind. Unabhängig davon, wie viele weitere Reiblamellen des ersten und zweiten Reiblamellensatzes 2, 66 drehfest mit den Lamellenträgern 74, 78 verbunden werden, muss sich die relative Drehposition sowie die Orientierung in Längsrichtung 80, 82 der neu anzubringenden Reiblamelle stets an der Drehposition der zuletzt angebrachten Reiblamelle desselben Reiblamellensatzes 2; 66 orientieren, wie dies bereits zuvor erläutert wurde.

Mit dem erfindungsgemäßen Verfahren wird ein Verfahren zur Montage oder/und Herstellung einer reibschlüssig arbeitenden Einrichtung geschaffen, die eine besonders schnelle und nachbearbeitungsfreie Montage einer reibschlüssig arbeitenden Einrichtung ermöglicht. Die durch das Verfahren geschaffenen reibschlüssig arbeitenden Einrichtungen haben den Vorteil, dass diese eine besonders hohe Momentengleichförmigkeit aufweisen.

### Bezugszeichenliste

- 2: erster Reiblamellensatz
- 4: Reiblamelle
- 6: Reiblamelle
- 8: Reiblamelle
- 10: Drehachse
- 12: Umfangsrichtung
- 14: Umfangsrichtung
- 16: Reibbelagträger
- 18: Innenrand
- 19: Außenrand
- 20: Innenverzahnung
- 22: Vorderseite
- 24: Rückseite
- 26: Reibbelag
- 28: Reibbelag
- 30: Reibbelagsegmente
- 32: Kühlölnuten
- 34: Innenrand
- 36: Außenrand
- 38: Reibfläche
- 40: Reibfläche
- 42: Kreis
- 44: Lasermesseinrichtung
- 46: Laser
- 48: Laser
- 50: Laserstrahl
- 52: Laserstrahl
- 54: erste Stelle
- 56: zweite Stelle
- 58: erste Markierung
- 60: Radiale
- 62: zweite Markierung
- 64: Radiale
- 66: zweiter Reiblamellensatz
- 68: Reiblamelle
- 70: Reiblamelle
- 72: Lamellentragabschnitt
- 74: erster Lamellenträger
- 76: Lamellentragabschnitt
- 78: zweiter Lamellenträger
- 80: Längsrichtung / axiale Richtung
- 82: Längsrichtung / axiale Richtung

- r₁: Radius
- r₂: Radius
- r₃: Radius

## Patentansprüche

1. Verfahren zur Montage oder/und Herstellung einer reibschlüssig arbeitenden Einrichtung, vorzugsweise einer Lamellenkupplung, besonders bevorzugt einer unter Schlupf betreibbaren Lamellenkupplung, mit den Verfahrensschritten
Bereitstellen eines ersten Reiblamellensatzes (2) aus mehreren Reiblamellen (4, 6, 8),
Messen der Lamellendicke der Reiblamellen (4, 6, 8) an mehreren Messstellen, die in Umfangsrichtung (12, 14) zueinander versetzt sind,
Ermitteln einer ersten Stelle (54), an der die Lamellendicke der einzelnen Reiblamelle (4, 6, 8) am größten ist, und einer zweiten Stelle (56), an der die Lamellendicke der einzelnen Reiblamelle (4, 6, 8) am kleinsten ist, aus den Messstellen,
Kennzeichnen der Position der ersten Stelle (54) und der zweiten Stelle (56) mit Hilfe von Markierungen (58, 62) an den Reiblamellen (4, 6, 8) und
drehfestes Verbinden der Reiblamellen (4, 6, 8) des ersten Reiblamellensatzes (2) mit einem ersten Lamellenträger (74) derart, dass jeweils eine zweite Reiblamelle (6; 8) des ersten Reiblamellensatzes (2) in einer Drehposition relativ zu einer benachbarten ersten Reiblamelle (4; 6) des ersten Reiblamellensatzes (2) angeordnet wird, in der die erste Stelle (54) der zweiten Reiblamelle (6; 8) bezogen auf die Umfangsrichtung (12, 14) am dichtesten an der zweiten Stelle (56) der benachbarten ersten Reiblamelle (4; 6) angeordnet ist.

2. Verfahren nach Anspruch 1, bei dem im Rahmen des Verfahrensschritts des drehfesten Verbindens der Reiblamellen (4, 6, 8) mit dem ersten Lamellenträger (74) die zweite Reiblamelle (6; 8) derart in axialer Richtung (80, 82) orientiert angeordnet wird, dass die zweite Stelle (56) der zweiten Reiblamelle (6; 8) bezogen auf die Umfangsrichtung (12, 14) am dichtesten an der ersten Stelle (54) der benachbarten ersten Reiblamelle (4; 6) angeordnet ist.

3. Verfahren nach einem der vorangehenden Ansprüche, bei dem die Reiblamellen (4, 6, 8) des bereitgestellten ersten Reiblamellensatzes (2) jeweils einen, vorzugsweise ringscheibenförmigen Reibbelagträger (16) und mindestens einen Reibbelag (26, 28) auf der Vorder- oder/und Rückseite (22, 24) des Reibbelagträgers (16) mit einer Reibfläche (38, 40) aufweisen, wobei die zweite Stelle (56) vorzugsweise ausschließlich aus denjenigen Messstellen ermittelt wird, an denen die mindestens eine Reibfläche (38, 40) durchgängig ausgebildet ist.

4. Verfahren nach Anspruch 3, bei dem der Reibbelag (26; 28) oder/und die Reibfläche (38; 40) der Reiblamellen (4, 6, 8) des ersten Reiblamellensatzes (2) vor dessen Bereitstellung mit demselben Werkzeug erzeugt, aufgebracht oder/und endbearbeitet werden.

5. Verfahren nach einem der Ansprüche 3 oder 4, bei dem das Messen der Lamellendicke über den gesamten Bereich der jeweiligen Reiblamelle (4, 6, 8) erfolgt, in dem die mindestens eine Reibfläche (38, 40) durchgängig ausgebildet ist.

6. Verfahren nach einem der Ansprüche 1 bis 4, bei dem das Messen der Lamellendicke an Messstellen erfolgt, die auf einem Kreis (42) in Umfangsrichtung (12, 14) hintereinanderliegend, vorzugsweise im gleichen Abstand hintereinanderliegend, angeordnet sind, wobei das Messen vorzugsweise an mindestens 28 Messstellen und besonders bevorzugt durchgehend entlang des Kreises (42) erfolgt.

7. Verfahren nach einem der vorangehenden Ansprüche, bei dem das Messen der Lamellendicke berührungslos, vorzugsweise mittels Lasermessung erfolgt, wobei die Messung an jeder einzelnen Messstelle besonders bevorzugt mittels beidseitiger Lasermessung erfolgt.

8. Verfahren nach einem der vorangehenden Ansprüche, bei dem das Kennzeichnen der Position der ersten Stelle (54) und der zweiten Stelle (56) mit Hilfe von Markierungen (58; 62) an den Reiblamellen (4, 6, 8) erfolgt, die sich bis zu einem Innenrand (18) oder Außenrand der Reiblamellen (4, 6, 8), vorzugsweise demjenigen Rand der Reiblamellen (4, 6, 8) erstrecken, der dem ersten Lamellenträger (74) zugewandt ist.

9. Verfahren nach einem der vorangehenden Ansprüche mit den weiteren Verfahrensschritten
Bereitstellen eines zweiten Reiblamellensatzes (66) aus mehreren Reiblamellen (68, 70), vorzugsweise Stahllamellen, und
drehfestes Verbinden der Reiblamellen (68, 70) des zweiten Reiblamellensatzes (66) mit einem zweiten Lamellenträger (78) derart, dass die Reiblamellen (68, 70) des zweiten Reiblamellensatzes (66) jeweils in axialer Richtung zwischen den, vorzugsweise allen, einander benachbarten Reiblamellen (4, 6; 6, 8) des ersten Reiblamellensatzes (2) angeordnet sind, wobei die einander benachbarten Reiblamellen (68, 70) des zweiten Reiblamellensatzes (66) besonders bevorzugt auf die selbe Weise relativ zueinander angeordnet werden wie die einander benachbarten Reiblamellen (4, 6; 6, 8) des ersten Reiblamellensatzes (2).

10. Reibschlüssig arbeitende Einrichtung, die nach einem der Ansprüche 1 bis 9 herstellbar ist, vorzugsweise Lamellenkupplung, besonders bevorzugt unter Schlupf betreibbare Lamellenkupplung, mit einem ersten Reiblamellensatz (2), dessen Reiblamellen (4, 6, 8) in axialer Richtung hintereinander drehfest an einem ersten Lamellenträger (74) angeordnet sind, wobei die Reiblamellen (4, 6, 8) jeweils eine erste Stelle (54), an der die Lamellendicke am größten ist, und eine zweite Stelle (56) aufweisen, an der die Lamellendicke am kleinsten ist, **dadurch gekennzeichnet, dass** jeweils eine zweite Reiblamelle (6; 8) des ersten Reiblamellensatzes (2) in einer Drehposition relativ zu einer benachbarten ersten Reiblamelle (4; 6) des ersten Reiblamellensatzes (2) angeordnet ist, in der die erste Stelle (54) der zweiten Reiblamelle (6; 8) bezogen auf die Umfangsrichtung (12, 14) am dichtesten an der zweiten Stelle (56) der benachbarten ersten Reiblamelle (4; 6) angeordnet ist.

11. Reibschlüssig arbeitende Einrichtung nach Anspruch 10, **dadurch gekennzeichnet, dass** die zweite Reiblamelle (6; 8) ferner derart in axialer Richtung (80, 82) orientiert an dem ersten Lamellenträger (74) drehfest angeordnet ist, dass die zweite Stelle (56) der zweiten Reiblamelle (6; 8) bezogen auf die Umfangsrichtung (12, 14) am dichtesten an der ersten Stelle (54) der benachbarten ersten Reiblamelle (4; 6) angeordnet ist.

12. Reibschlüssig arbeitende Einrichtung nach einem der Ansprüche 10 oder 11, **dadurch gekennzeichnet, dass** die Reiblamellen (4, 6, 8) des ersten Reiblamellensatzes (2) jeweils einen, vorzugsweise ringscheibenförmigen Reibbelagträgers (16) und mindestens einen Reibbelag (26, 28) auf der Vorder- oder/und Rückseite (22, 24) des Reibbelagträgers (16) mit einer Reibfläche (38, 40) aufweisen, wobei die zweite Stelle (56) eine Stelle ist, an der die mindestens eine Reibfläche (38, 40) durchgängig ausgebildet ist.

13. Reibschlüssig arbeitende Einrichtung nach Anspruch 12, **dadurch gekennzeichnet, dass** der Reibbelag (26, 28) oder/und die Reibfläche (38, 40) der Reiblamellen (4, 6, 8) des ersten Reiblamellensatzes (2) mit demselben Werkzeug erzeugt, aufgebracht oder/und endbearbeitet wurden.

14. Reibschlüssig arbeitende Einrichtung nach einem der Ansprüche 9 bis 12, **dadurch gekennzeichnet, dass** ferner ein zweiter Reiblamellensatz (66) vorgesehen ist, dessen Reiblamellen (68, 70), die vorzugsweise als Stahllamellen ausgebildet sind, jeweils in axialer Richtung zwischen den, vorzugsweise allen, einander benachbarten Reiblamellen (4, 6; 6, 8) des ersten Reiblamellensatzes (2) und drehfest an einem zweiten Lamellenträger (78) angeordnet sind, wobei die einander benachbarten Reiblamellen (68, 70) des zweiten Reiblamellensatzes (66) besonders bevorzugt auf die selbe Weise relativ zueinander angeordnet sind wie die einander benachbarten Reiblamellen (4, 6; 6, 8) des ersten Reiblamellensatzes (2).

15. Reiblamellensatz (2) für eine reibschlüssig arbeitende Einrichtung, vorzugsweise eine Lamellenkupplung, besonders bevorzugt eine unter Schlupf betreibbare Lamellenkupplung, mit mehreren Reiblamellen (4, 6, 8) zur drehfesten Befestigung an einem ersten Lamellenträger (74), wobei die Reiblamellen (4, 6, 8) jeweils eine erste Stelle (54), an der die Lamellendicke am größten ist, und eine zweite Stelle (56) aufweisen, an der die Lamellendicke am kleinsten ist, **dadurch gekennzeichnet, dass** die Position der ersten Stelle (54) und der zweiten Stelle (56) mit Hilfe von Markierungen (58; 62) an den Reiblamellen (4, 6, 8) gekennzeichnet ist, wobei sich die Markierungen (58, 62) vorzugsweise bis zu einem Innenrand (18) oder Außenrand der Reiblamellen (4, 6, 8), besonders bevorzugt bis zu demjenigen Rand (18) der Reiblamellen (4, 6, 8) erstrecken, der dem ersten Lamellenträger (74) zugewandt ist.

## Claims

1. Method for the assembly and/or production of a frictionally operating device, preferably a multiplate clutch, particularly preferably a multiplate clutch that is operable in a slipping state, having the method steps:
providing a first friction plate set (2) composed of multiple friction plates (4, 6, 8),
measuring the plate thickness of the friction plates (4, 6, 8) at multiple measurement points offset with respect to one another in a circumferential direction (12, 14),
determining, from the measurement points, a first point (54) at which the plate thickness of the individual friction plate (4, 6, 8) is at its greatest, and a second point (56) at which the plate thickness of the individual friction plate (4, 6, 8) is at its smallest,
labelling the position of the first point (54) and of the second point (56) with the aid of markings (58, 62) on the friction plates (4, 6, 8), and
rotationally conjointly connecting the friction plates (4, 6, 8) of the first friction plate set (2) to a first plate carrier (74) such that in each case one second friction plate (6; 8) of the first friction plate set (2) is arranged, relative to an adjacent first friction plate (4; 6) of the first friction plate set (2), in a rotational position in which the first point (54) of the second friction plate (6; 8) is arranged at its closest to the second point (56) of the adjacent first friction plate (4; 6) in relation to the circumferential direction (12, 14).

2. Method according to Claim 1, in which, during the method step of rotationally conjointly connecting the friction plates (4, 6, 8) to the first plate carrier (74), the second friction plate (6; 8) is arranged with orientation in an axial direction (80, 82) such that the second point (56) of the second friction plate (6; 8) is arranged at its closest to the first point (54) of the adjacent first friction plate (4; 6) in relation to the circumferential direction (12, 14).

3. Method according to one of the preceding claims, in which the friction plates (4, 6, 8) of the provided first friction plate set (2) each have a preferably annular-disc-shaped friction pad carrier (16) and at least one friction pad (26, 28) on the front and/or rear side (22, 24) of the friction pad carrier (16) with a friction surface (38, 40), wherein the second point (56) is preferably determined exclusively from those measurement points at which the at least one friction surface (38, 40) is formed all the way through.

4. Method according to Claim 3, in which the friction pad (26; 28) and/or the friction surface (38; 40) of the friction plates (4, 6, 8) of the first friction plate set (2) are generated, applied and/or finish-machined using the same tool before the provision of said first friction plate set.

5. Method according to either of Claims 3 and 4, in which the measurement of the plate thickness is performed over the entirety of that region of the respective friction plate (4, 6, 8) in which the at least one friction surface (38, 40) is formed all the way through.

6. Method according to one of Claims 1 to 4, in which the measurement of the plate thickness is performed at measurement points which are arranged one behind the other, preferably one behind the other at uniform intervals, on a circle (42) in the circumferential direction (12, 14), wherein the measurement is preferably performed at at least 28 measurement points, and particularly preferably continuously along the circle (42).

7. Method according to one of the preceding claims, in which the measurement of the plate thickness is performed in contactless fashion, preferably by way of laser measurement, wherein the measurement at each individual measurement point is particularly preferably performed by way of laser measurement on both sides.

8. Method according to one of the preceding claims, in which the labelling of the position of the first point (54) and of the second point (56) is performed with the aid of markings (58; 62) on the friction plates (4, 6, 8), which markings extend as far as an inner edge (18) or outer edge of the friction plates (4, 6, 8), preferably as far as that edge of the friction plates (4, 6, 8) which faces toward the first plate carrier (74).

9. Method according to one of the preceding claims, having the further method steps:
providing a second friction plate set (66) composed of multiple friction plates (68, 70), preferably steel plates, and
rotationally conjointly connecting the friction plates (68, 70) of the second friction plate set (66) to a second plate carrier (78) such that the friction plates (68, 70) of the second friction plate set (66) are arranged in each case in an axial direction between the, preferably all of the, mutually adjacent friction plates (4, 6; 6, 8) of the first friction plate set (2), wherein the mutually adjacent friction plates (68, 70) of the second friction plate set (66) are particularly preferably arranged relative to one another in the same way as the mutually adjacent friction plates (4, 6; 6, 8) of the first friction plate set (2).

10. Frictionally operating device that can be produced in accordance with one of Claims 1 to 9, preferably multiplate clutch, particularly preferably multiplate clutch that is operable in a slipping state, having a first friction plate set (2), the friction plates (4, 6, 8) of which are arranged, one behind the other in an axial direction, rotationally conjointly on a first plate carrier (74), wherein the friction plates (4, 6, 8) have in each case a first point (54) at which the plate thickness is at its greatest, and a second point (56) at which the plate thickness is at its smallest, **characterized in that** in each case one second friction plate (6; 8) of the first friction plate set (2) is arranged, relative to an adjacent first friction plate (4; 6) of the first friction plate set (2), in a rotational position in which the first point (54) of the second friction plate (6; 8) is arranged at its closest to the second point (56) of the adjacent first friction plate (4; 6) in relation to the circumferential direction (12, 14).

11. Frictionally operating device according to Claim 10, **characterized in that** the second friction plate (6; 8) is furthermore arranged rotationally conjointly on the first plate carrier (74), with orientation in an axial direction (80, 82), such that the second point (56) of the second friction plate (6; 8) is arranged at its closest to the first point (54) of the adjacent first friction plate (4; 6) in relation to the circumferential direction (12, 14).

12. Frictionally operating device according to either of Claims 10 and 11, **characterized in that** the friction plates (4, 6, 8) of the first friction plate set (2) each have a preferably annular-disc-shaped friction pad carrier (16) and at least one friction pad (26, 28) on the front and/or rear side (22, 24) of the friction pad carrier (16) with a friction surface (38, 40), wherein the second point (56) is a point at which the at least one friction surface (38, 40) is formed all the way through.

13. Frictionally operating device according to Claim 12, **characterized in that** the friction pad (26, 28) and/or the friction surface (38, 40) of the friction plates (4, 6, 8) of the first friction plate set (2) have been generated, applied and/or finish-machined using the same tool.

14. Frictionally operating device according to one of Claims 9 to 12, **characterized in that,** furthermore, a second friction plate set (66) is provided whose friction plates (68, 70), which are preferably in the form of steel plates, are arranged in each case in an axial direction between the, preferably all of the, mutually adjacent friction plates (4, 6; 6, 8) of the first friction plate set (2) and rotationally conjointly on a second plate carrier (78), wherein the mutually adjacent friction plates (68, 70) of the second friction plate set (66) are particularly preferably arranged relative to one another in the same way as the mutually adjacent friction plates (4, 6; 6, 8) of the first friction plate set (2).

15. Friction plate set (2) for a frictionally operating device, preferably a multiplate clutch, particularly preferably a multiplate clutch that is operable in a slipping state, having multiple friction plates (4, 6, 8) for rotationally conjoint fastening to a first plate carrier (74), wherein the friction plates (4, 6, 8) have in each case a first point (54) at which the plate thickness is at its greatest, and a second point (56) at which the plate thickness is at its smallest, **characterized in that** the position of the first point (54) and of the second point (56) is labelled with the aid of markings (58; 62) on the friction plates (4, 6, 8), wherein the markings (58, 62) extend preferably as far as an inner edge (18) or outer edge of the friction plates (4, 6, 8), particularly preferably as far as that edge (18) of the friction plates (4, 6, 8) which faces toward the first plate carrier (74).

## Revendications

1. Procédé de montage et/ou de fabrication d'un dispositif travaillant par frottement, de préférence d'un embrayage à lamelles et de manière particulièrement préférable d'un embrayage à lamelles pouvant fonctionner en patinage, le procédé présentant les étapes qui consistent à :
préparer un premier jeu (2) constitué de plusieurs lamelles de frottement (4, 6, 8),
mesurer l'épaisseur des lamelles de frottement (4, 6, 8) en plusieurs emplacements de mesure décalés les uns par rapport aux autres dans la direction périphérique (12, 14),
déterminer parmi les emplacements de mesure un premier emplacement (54) sur lequel l'épaisseur des différentes lamelles de frottement (4, 6, 8) est la plus grande et un deuxième emplacement (56) sur lequel l'épaisseur des différentes lamelles de frottement (4, 6, 8) est la plus petite,
caractériser la position du premier emplacement (54) et du deuxième emplacement (56) à l'aide de repères (58, 62) apportés sur les lamelles de frottement (4, 6, 8) et
relier les lamelles de frottement (4, 6, 8) du premier jeu (2) de lamelles de frottement à rotation solidaire avec un premier porte-lamelles (74) de telle sorte que chaque deuxième lamelle de frottement (6; 8) du premier jeu (2) de lamelles de frottement soit disposée par rapport à une première lamelle de frottement (4; 6) voisine du premier jeu (2) de lamelles de frottement en une position de rotation dans laquelle le premier emplacement (54) de la deuxième lamelle de frottement (6; 8) est le plus proche du deuxième emplacement (56) de la première lamelle de frottement voisine (4; 6) dans la direction périphérique (12; 14).

2. Procédé selon la revendication 1, dans lequel au cours de l'étape de procédé qui consiste à relier les lamelles de frottement (4, 6, 8) à rotation solidaire avec le premier porte-lamelles (74), la deuxième lamelle de frottement (6; 8) est orientée dans la direction axiale (80, 82) de telle sorte que le deuxième emplacement (56) de la deuxième lamelle de frottement (6; 8) soit disposé au plus près du premier emplacement (54) de la première lamelle de frottement (4; 6) voisine dans la direction périphérique (12, 14).

3. Procédé selon l'une des revendications précédentes, dans lequel les lamelles de frottement (4, 6, 8) du premier jeu (2) de lamelles de frottement qui a été préparé présentent chacune un porte-garniture de frottement (16) de préférence en forme de disque annulaire, et sur le côté avant et/ou le côté arrière (22, 24) du porte-garniture de frottement (16), au moins une garniture de frottement (26, 28) présentant une surface de frottement (38, 40), le deuxième emplacement (56) étant déterminé de préférence exclusivement parmi les emplacements de mesure sur lesquels la ou les surfaces de frottement (38, 40) sont formées de manière continue.

4. Procédé selon la revendication 3, dans lequel la garniture de frottement (26; 28) et/ou la surface de frottement (38; 40) des lamelles de frottement (4, 6, 8) du premier jeu (2) de lamelles de frottement sont formées, appliquées et/ou finies à l'aide d'un même outil avant leur mise à disposition.

5. Procédé selon l'une des revendications 3 ou 4, dans lequel la mesure de l'épaisseur des lamelles s'effectue sur la totalité de la partie de la lamelle de frottement (4, 6, 8) concernée dans laquelle la ou les surfaces de frottement (38, 40) sont formées de manière continue.

6. Procédé selon l'une des revendications 1 à 4, dans lequel la mesure de l'épaisseur des lamelles s'effectue en des emplacements de mesure disposés les uns à la suite des autres, de préférence au même intervalle, sur un cercle (42) disposé dans la direction périphérique (12, 14), la mesure s'effectuant de préférence en au moins 28 emplacements de mesure et de façon particulièrement préférable de manière continue sur le cercle (42).

7. Procédé selon l'une des revendications précédentes, dans lequel la mesure de l'épaisseur des lamelles s'effectue sans contact, de préférence à l'aide d'une mesure laser, la mesure s'effectuant en chaque emplacement de mesure de manière particulièrement préférable au moyen d'une mesure laser sur les deux faces.

8. Procédé selon l'une des revendications précédentes, dans lequel la caractérisation de la position du premier emplacement (54) et du deuxième emplacement (56) s'effectue à l'aide de repères (58; 62) apportés sur les lamelles de frottement (4, 6, 8) et qui s'étendent jusqu'au bord intérieur (18) ou le bord extérieur des lamelles de frottement (4, 6, 8), de préférence sur le bord des lamelles de frottement (4, 6, 8) qui est tourné vers le premier porte-lamelles (74).

9. Procédé selon l'une des revendications précédentes, présentant les autres étapes suivantes :
préparer un deuxième jeu (66) de lamelles de frottement constitué de plusieurs lamelles de frottement (68, 70), de préférence des lamelles en acier,
relier les lamelles de frottement (68, 70) du deuxième jeu (66) de lamelles de frottement à rotation solidaire avec un deuxième porte-lamelles (78) de telle sorte que les lamelles de frottement (68, 70) du deuxième jeu (66) de lamelles de frottement soient disposées toutes dans la direction axiale entre les et de préférence toutes les lamelles de frottement (4, 6; 6, 8) mutuellement voisines du premier jeu (2) de lamelles de frottement, les lamelles de frottement (68, 70) mutuellement voisines du deuxième jeu (66) de lamelles de frottement étant disposées de façon particulièrement préférable l'une par rapport à l'autre de la même manière que les lamelles de frottement (4, 6; 6, 8) mutuellement voisines du premier jeu (2) de lamelles de frottement.

10. Dispositif travaillant par frottement et apte à être fabriqué selon l'une des revendications 1 à 9, de préférence embrayage à lamelles et de façon particulièrement préférable embrayage à lamelles pouvant fonctionner en patinage, et présentant un premier jeu (2) de lamelles de frottement dont les lamelles de frottement (4, 6, 8) sont disposées à rotation solidaire sur un premier porte-lamelles (74) les unes derrière les autres dans la direction axiale, les lamelles de frottement (4, 6, 8) présentant toutes un premier emplacement (54) sur lequel l'épaisseur de la lamelle est la plus grande et un deuxième emplacement (56) sur lequel l'épaisseur de la lamelle est la plus petite,
**caractérisé en ce que**
chaque deuxième lamelle de frottement (6; 8) du premier jeu (2) de lamelles de frottement est disposée par rapport à une première lamelle de frottement (4; 6) voisine du premier jeu (2) de lamelles de frottement en une position de rotation dans laquelle le premier emplacement (54) de la deuxième lamelle de frottement (6; 8) est disposé au plus près du deuxième emplacement (56) de la première lamelle de frottement (4; 6) voisine dans la direction périphérique (12, 14).

11. Dispositif travaillant par frottement selon la revendication 10, **caractérisé en ce que** la deuxième lamelle de frottement (6; 8) est en outre disposée à rotation solidaire sur le premier porte-lamelles (74) en étant orientée dans la direction axiale (80, 82) de telle sorte que le deuxième emplacement (56) de la deuxième lamelle de frottement (6; 8) soit disposé au plus près du premier emplacement (54) de la première lamelle de frottement (4; 6) voisine dans la direction périphérique (12, 14).

12. Dispositif travaillant par frottement selon l'une des revendications 10 ou 11, **caractérisé en ce que** les lamelles de frottement (4, 6, 8) du premier jeu (2) de lamelles de frottement présentent chacune un porte-garniture de frottement (16) de préférence en forme de plaque annulaire et, sur le côté avant et/ou le côté arrière (22, 24) du porte-garniture de frottement (16), au moins une garniture de frottement (26, 28) présentant une surface de frottement (38, 40), le deuxième emplacement (56) étant un emplacement sur lequel au moins une surface de frottement (38, 40) est formée de manière continue.

13. Dispositif travaillant par frottement selon la revendication 12, **caractérisé en ce que** la garniture de frottement (26, 28) et/ou la surface de frottement (38, 40) des lamelles de frottement (4, 6, 8) du premier jeu (2) de lamelles de frottement sont formées, appliquées et/ou finies à l'aide d'un même outil.

14. Dispositif travaillant par frottement selon l'une des revendications 9 à 12, **caractérisé en ce qu'**il présente en outre un deuxième jeu (66) de lamelles de frottement dont les lamelles de frottement (68, 70), de préférence formées de lamelles d'acier, sont toutes disposées dans la direction axiale entre les et de préférence toutes les lamelles de frottement (4, 6; 6, 8) mutuellement voisines du premier jeu (2) de lamelles de frottement et sont disposées à rotation solidaire sur un deuxième porte-lamelles (78), les lamelles de frottement (68, 70) mutuellement voisines du deuxième jeu (66) de lamelles de frottement étant disposées de façon particulièrement préférable les unes par rapport aux autres de la même manière que les lamelles de frottement (4, 6; 6, 8) mutuellement voisines du premier jeu (2) de lamelles de frottement.

15. Jeu (2) de lamelles de frottement pour dispositif travaillant par frottement, de préférence pour embrayage à lamelles et de façon particulièrement préférable embrayage à lamelles utilisable en patinage, et présentant plusieurs lamelles de frottement (4, 6, 8) destinées à être fixées à rotation solidaire sur un premier porte-lamelles (74), les lamelles de frottement (4, 6, 8) présentant toutes un premier emplacement (54) sur lequel l'épaisseur de la lamelle est la plus grande et un deuxième emplacement (56) sur lequel l'épaisseur de la lamelle est la plus petite,
**caractérisé en ce que**
la position du premier emplacement (54) et celle du deuxième emplacement (56) sont caractérisées à l'aide de repères (58; 62) formés sur les lamelles de frottement (4, 6, 8), les repères (58, 62) s'étendant de préférence jusqu'à un bord intérieur (18) ou un bord extérieur des lamelles de frottement (4, 6, 8) et de façon particulièrement préférable jusqu'au bord (18) de la lamelle de frottement (4, 6, 8) qui est tourné vers le premier porte-lamelles (74).
